(19) 

Europäisches
Patentamt
European
Patent Office
Office européen
des brevets

(11) **EP 4 412 137 A1**

(12) **EUROPEAN PATENT APPLICATION**
published in accordance with Art. 153(4) EPC

(43) Date of publication:
**07.08.2024  Bulletin 2024/32**

(21) Application number: **22876945.1**

(22) Date of filing: **30.09.2022**

(51) International Patent Classification (IPC):
*H04L 5/00* (2006.01)    *H04W 68/02* (2009.01)
*H04W 72/04* (2023.01)   *H04W 68/00* (2009.01)
*H04W 52/02* (2009.01)

(52) Cooperative Patent Classification (CPC):
**H04L 5/00; H04W 52/02; H04W 68/00;
H04W 68/02; H04W 72/04**

(86) International application number:
**PCT/KR2022/014760**

(87) International publication number:
**WO 2023/055173 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021  KR 20210129344
01.10.2021  KR 20210131173**

(71) Applicant: **LG Electronics Inc.**
**Yeongdeungpo-gu**
**Seoul 07336 (KR)**

(72) Inventors:
• **HWANG, Seunggye**
**Seoul 06772 (KR)**
• **KIM, Jaehyung**
**Seoul 06772 (KR)**
• **LEE, Youngdae**
**Seoul 06772 (KR)**
• **YANG, Suckchel**
**Seoul 06772 (KR)**

(74) Representative: **Plasseraud IP
66, rue de la Chaussée d'Antin
75440 Paris Cedex 09 (FR)**

(54) **METHOD AND DEVICE FOR TRANSMITTING OR RECEIVING WIRELESS SIGNAL IN WIRELESS COMMUNICATION SYSTEM**

(57)    A terminal according to the present disclosure may perform detection of paging DCI at a corresponding paging occasion on the basis that at least one of a plurality of conditions configured in the terminal is satisfied as a result of monitoring a specific signal related to whether detection of the paging DCI is required for the terminal, and the plurality of conditions may include a first condition for performing the detection of the paging DCI in a state in which the specific signal is detected, and at least one second condition for performing the detection of the paging DCI even in a state in which the specific signal is not detected.

**FIG. 12**

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**Technical Problem**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solution**

According to an aspect of the present disclosure, provided herein is a method of receiving a signal by a user equipment (UE) in a wireless communication system, including monitoring a specific signal related to whether the UE is required to detect paging downlink control information (DCI) in a radio resource control (RRC) idle or RRC inactive state; and performing detection of the paging DCI in a corresponding paging occasion (PO) based on at least one of a plurality of conditions configured in the UE being satisfied as a result of monitoring the specific signal. The conditions configured in the UE to perform detection of the paging DCI may include a first condition for performing the detection of the paging DCI in a state in which the specific signal is detected as a result of monitoring the specific signal and at least one second condition for performing the detection of the paging DCI even in a state in which the specific signal is not detected as a result of monitoring the specific signal. The UE may perform detection of the paging DCI at least once during a pre-configured time duration based on the at least one second condition although the specific signal is not detected.

The pre-configured time duration may be determined based on a periodicity for updating system information or an integer multiple of a paging periodicity.

A location of a PO for detecting the paging DCI based on the at least one second condition among a plurality of POs may be pre-configured by a base station (BS).

The UE may perform only detection of the paging DCI without receiving a physical downlink shared channel (PDSCH) scheduled by the paging DCI, based on at least one second condition being satisfied.

The at least one second condition may not be satisfied based on detection of the specific signal at least once during the pre-configured time duration.

The at least one second condition may be satisfied based on short message information or a tracking reference signal (TRS) availability indication included in the paging DCI being not acquired at least once during the pre-configured time duration.

The specific signal may be a paging early indication (PEI) signal or a wake-up signal.

A number of POs for detecting the paging DCI based on the at least one second condition among a plurality of POs may be determined based on a length of the pre-configured time duration.

In another aspect of the present disclosure, provided herein is a computer-readable recording medium in which a program for performing the method of receiving a signal is stored.

In another aspect of the present disclosure, provided herein is a UE performing the method of receiving a signal.

In another aspect of the present disclosure, provided herein is a device for controlling the UE performing the method of receiving a signal.

In another aspect of the present disclosure, provided herein is a method of transmitting a signal by a base station (BS) in a wireless communication system, including transmitting a configuration for a specific signal related to whether a user equipment (UE) is required to detect paging downlink control information (DCI) in a radio resource control (RRC) idle or RRC inactive state; and transmitting the paging DCI in a corresponding paging occasion

(PO) based on at least one of a plurality of conditions configured in the UE being satisfied. The conditions may include a first condition for transmitting the paging DCI in a state in which the specific signal is transmitted based on the configuration for the specific signal and at least one second condition for transmitting the paging DCI although the specific signal is not transmitted. The BS may perform transmission of the paging DCI at least once during a pre-configured time duration based on the at least one second condition although the specific signal is not transmitted.

In another aspect of the present disclosure, provided herein is a BS performing the method of transmitting a signal.

## Advantageous Effects

According to an embodiment of the present disclosure, a UE may perform PO monitoring more efficiency in terms of power.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## Brief Description of Drawings

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIG. 8 illustrates a long term evolution (LTE)-based wake-up signal.

FIG. 9 illustrates a flowchart of operation of a BS according to an embodiment of the present disclosure.

FIG. 10 illustrates a flowchart of operation of a UE according to an embodiment of the present disclosure.

FIG. 11 illustrates an example in which a modification period boundary is located between a paging early indication (PEI) and a paging occasion (PO).

FIG. 12 illustrate a signal reception method of a UE according to an embodiment of the present disclosure.

FIG. 13 illustrates a signal transmission method of a BS according to an embodiment of the present disclosure.

FIG. 14 illustrates a flowchart of operation of a BS according to an embodiment of the present disclosure.

FIG. 15 illustrates a flowchart of operation of a UE according to an embodiment of the present disclosure.

FIG. 16 illustrates an example of determination of a tracking reference signal (TRS) resource set index.

FIGS. 17 to 20 illustrate an example of a communication system 1 and wireless devices applicable to the present disclosure.

FIG. 21 illustrates an exemplary discontinuous reception (DRX) operation applicable to the present disclosure.

## MODE FOR INVENTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- TS 36.211: Physical channels and modulation
- TS 36.212: Multiplexing and channel coding
- TS 36.213: Physical layer procedures
- TS 36.300: Overall description
- TS 36.321: Medium Access Control (MAC)
- TS 36.331: Radio Resource Control (RRC)

3GPP NR

- TS 38.211: Physical channels and modulation
- TS 38.212: Multiplexing and channel coding
- TS 38.213: Physical layer procedures for control
- TS 38.214: Physical layer procedures for data
- TS 38.300: NR and NG-RAN Overall Description
- TS 38.304: User Equipment (UE) procedures in idle mode and in RRC Inactive state
- TS 38.321: Medium Access Control (MAC)
- TS 38.331: Radio Resource Control (RRC) protocol specification
- TS 37.213: Introduction of channel access procedures to unlicensed spectrum for NR-based access

Terms and Abbreviations

- PSS: Primary Synchronization Signal
- SSS: Secondary Synchronization Signal
- CRS: Cell reference signal
- CSI-RS: Channel State Information Reference Signal
- TRS: Tracking Reference Signal
- SS: Search Space
- CSS: Common Search Space
- USS: UE-specific Search Space
- PDCCH: Physical Downlink Control Channel; The PDCCH is used to represent PDCCHs of various structures which may be used for the same purpose in the following description.
- PO: Paging Occasion
- MO: Monitoring Occasion

- BD: Blind Decoding
- Paging DCI: DCI format 1_0 with CRC scrambled by P-RNTI

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

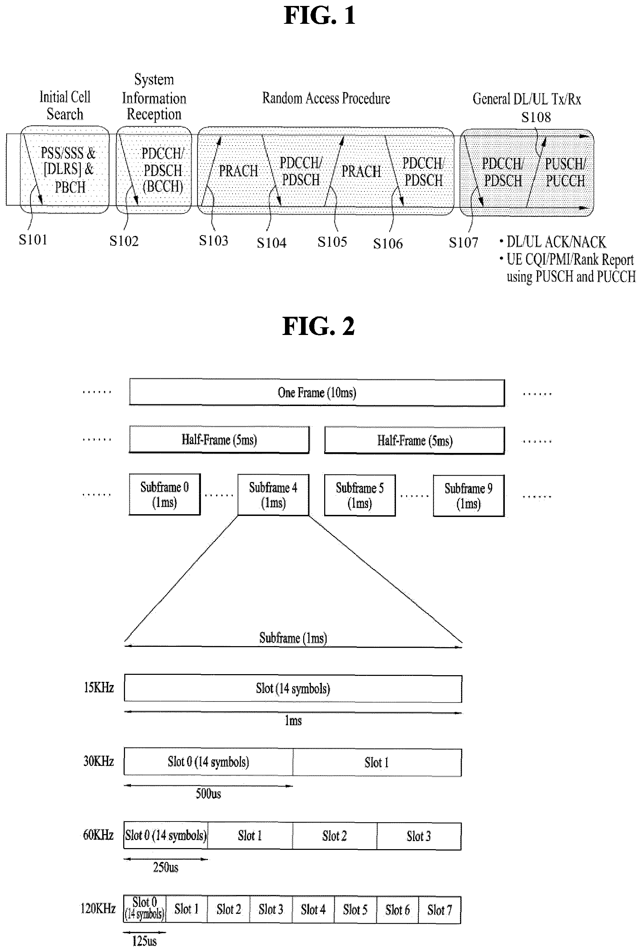

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S 106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

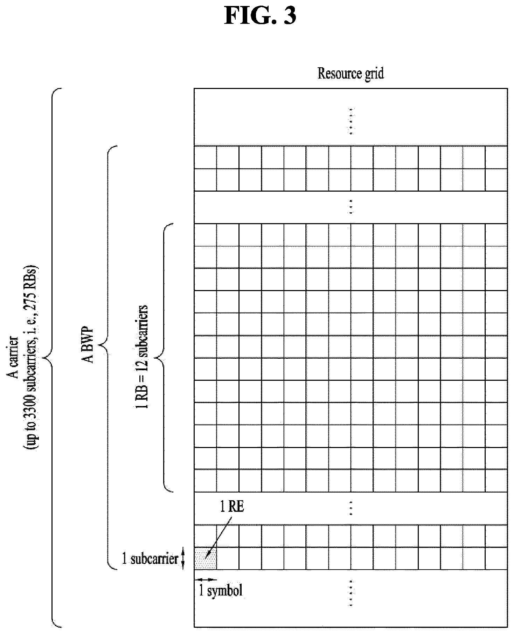

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

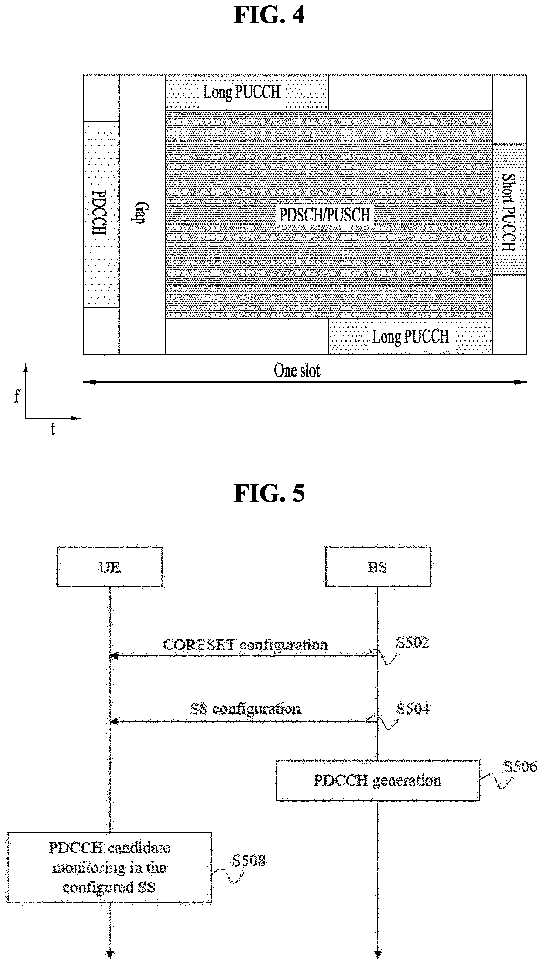

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

-    controlResourceSetId: Indicates the ID of a CORESET.

- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={ 1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |

(continued)

| Type | Search Space | RNTI | Use Case |
|---|---|---|---|
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1 0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

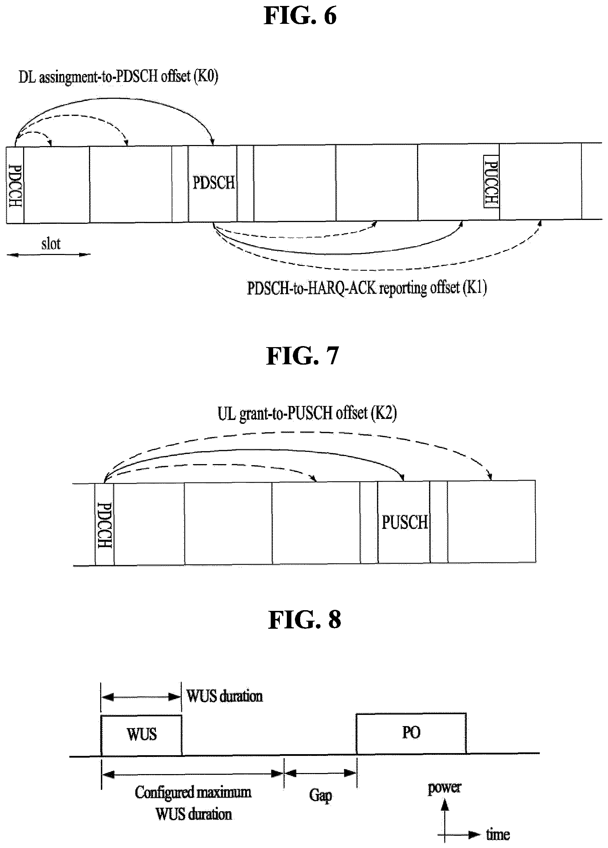

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

**Paging**

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each PO signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \text{ div } N)*(\text{UE\_ID} \bmod N)$$

- An index i_s indicating the index of the PO is determined by:

$$\text{i\_s} = \text{floor}(\text{UE\_ID}/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

## WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 8 is a diagram illustrating a WUS in an LTE system. Referring to FIG. 8, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## Paging related Operations

In communication systems such as LTE and NR, paging is used for the purpose of triggering RRC setup, system information modification, and/or a PWS/ETWS notification. The UE monitors a PDCCH at the position of a PO configured by the BS and, when detecting DCI scrambled with a P-RNTI, performs an operation indicated by the DCI.

In LTE Rel-15 NB-IoT and MTC, the WUS was introduced to save power of a UE. The WUS is a signal indicating whether an actual paging transmission exists in a PO at a specific position. When the BS wants to transmit paging in the PO at the specific position, the BS may transmit the WUS at WUS transmission position(s) associated with the PO. The UE monitors the WUS transmission position(s) associated with the PO at the specific position. Upon detection of the WUS at the WUS transmission position(s), the UE may expect that paging will be transmitted in the PO. When the UE fails to detect the WUS at the WUS transmission position(s), the UE does not expect paging in the PO. This operation may bring the gain of power saving. In LTE Rel-16 NB-IoT and MTC, the UE-group WUS was introduced to increase the power saving gain of the Rel-15 WUS. The UE-group WUS is advantageous in that the unnecessary wake-up probability of a UE may be reduced by using a WUS transmission position and sequence determined based on the UE group ID of the UE.

In Rel-16 NR, a DCI-based power saving scheme has been introduced for the purpose of supporting power saving in a connected mode. To this end, a new DCI format, DCI format 2-6 has been introduced. Specifically, the BS indicates the position of bits to be monitored by the UE in DCI format 2-6, and the UE determines power saving operations in an active time duration based on information on the bits at the corresponding position.

As discussed in Rel-16 NB-IoT and MTC, when a UE in an idle/inactive mode monitors a PO, unnecessary wake-up may occur if paging for other UEs sharing the same PO is transmitted. The unnecessary wake-up may lead to increases in UE power consumption. In current NR, the DCI-based scheme for preventing the connected mode UE from performing unnecessary monitoring has been introduced to achieve the power saving effect as described above. However, the same (or similar) method has not been defined for the idle/inactive mode.

In Rel-17 NR, the introduction of a paging early indication (PEI), which provides information related to paging prior to a PO for the purpose of saving power of the UE, is being discussed. Currently, in Rel-17 NR, methods that include additional information (hereinafter add-info) in information provided by the PEI, in addition to information related to a wake-up indication and a UE subgroup indication in a PO, are under discussion. The following information is being discussed and may be included in the add-info.

- Short message (or short message indication): Indication information that includes all or part of a short message field that may be transmitted through a paging PDCCH in the PEI or indicates PDCCH monitoring-only at the location of a PO in order to confirm the short message field
- TRS availability indication: Information indicating whether a UE in an idle/inactive mode state may actually assume TRS reception at the location of a configured TRS resource
- UE group indication: UE group information for identifying wake-up information indication for each PO when multiple POs correspond to one PEI

In particular, in the case of the short messages (or short message indication), a specific information acquisition procedure and method for a PEI-capable UE need to be defined. In NR, a PO is used not only for scheduling a paging message of the UE, but also for transmitting and receiving the short message. Based on the current NR standard, a paging PDCCH (i.e., a PDCCH through which DCI format 1_0 with a CRC scrambled by a P-RNTI is transmitted and received) includes a DCI field for transmitting the short message, and through the DCI field, information related to an SI change indication and a PWS notification may be provided. This information contains essential content for all UEs in the idle/inactive mode state to perform transmission and reception procedures for various signals/channels and is used for the purpose of notifying ETWS/CMAS-capable UEs of an emergency/disaster state. Therefore, the information needs to be provided regardless of whether the UE performs PEI monitoring. Additionally, in the current NR standard, when a UE acquires the short message through the paging PDCCH at the location of the PO, a method of determining related information and performing subsequent procedures is described. If this method is extended to the case of acquiring the short message through a PEI, a criterion of the subsequent procedures may become ambiguous. Therefore, when the PEI is introduced, a method and procedure through which UEs that monitor the PEI acquire the short message need to be clearly designed. In this regard, it is desirable to ensure the power saving gain of the UE suitable for the purpose of introduction of the PEI.

On the other hand, from the perspective of a BS, when supporting the PEI, a problem of increased network overhead due to PEI transmission needs to be considered. If a PEI-capable UE is included in a receiving target of the paging message, the BS that supports PEI transmission and reception and provides configuration information related thereto to the UE should transmit all the PEI and a paging PDCCH/PDSCH. In this case, if the BS does not have a paging message to be transmitted but needs to provide the short message, the BS should still perform PEI transmission for the PEI-capable UE, which may cause an increase in overhead. This problem of increased overhead may equally occur regardless of whether the short message is provided through the PEI. Therefore, it is necessary to consider how to control network overhead in a PEI acquisition procedure.

To solve these problems, methods for the UE that monitors the PEI to receive the PEI or acquire add-info at the location of a PO and procedures related to the methods are proposed. The proposed methods may be advantageous in increasing power saving efficiency of the UE and obtaining a network overhead saving effect and may be used to prevent an ambiguity problem of information between the BS and the UE by clearly defining the add-info acquisition procedure of the UE.

Hereinbelow, while a description will be given focusing upon short message information (i.e., SI change indication and/or PWS notification), the present disclosure may generally be applied to other types of add-info (e.g., TRS availability indication) unless otherwise specified. In addition, while the proposed methods will be described based mainly on a PDCCH-based PEI representing information through a DCI format, the present disclosure is not limited thereto and may also be applied in the case of a sequence-based PEI (i.e., a PEI method in which information is distinguished through sequence detection). In addition, while the proposed methods will be described based on a design method of a DCI format exchanged for transmission/reception of the PEI and a monitoring operation of a UE therefor, the present disclosure is not limited thereto and may generally be applied to a design method of any physical channel (e.g., a PDCCH/PUCCH) and an information transmission format (e.g., DCI/UCI) through the physical channel, and an operation method of the UE therefor.

Hereinafter, the term short message will be described to refer to all (or part) of information included in a short message field (i.e., a field that contains short message information among fields configured when a CRC of DCI format 1_0 is scrambled by a P-RNTI) defined in the current NR standard. For example, the short message may include information related to an SI change indication and/or a PWS notification. However, the present disclosure is not limited thereto. When there is short message information added to the current NR standard (i.e., Rel-16 NR standard), the short message mentioned in the proposed method may encompass the added short message information as long as the principle of the disclosure is maintained.

An NR system will be exemplarily described below, and embodiments described below may be applied to NR Rel. 17 and later versions (Rel. 18+, etc.). However, the present disclosure is not limited thereto and may be applied to various wireless communication systems. One or more of the following methods may be combined or may be practiced independently without combination. Terms, symbols, sequences, etc. may be replaced with other terms, symbols, sequences, etc. For example, the term PEI may be replaced with a wake-up signal (WUS) or a low power wake-up signal (LP-WUS).

It is expected that power saving will be discussed as an important research topic in the future NR standard. In particular, power saving is a very important issue for UEs that do not have a continuous power source. As an example related to a 5G UE, sensors and actuators are widely installed for monitoring, measurement, and charging, and a battery of the corresponding device may not be rechargeable and may require at least several years of use after installation. Additionally, other implementation examples of the 5G UE may include wearable devices such as smartwatches and medical monitoring devices. However, these devices have limitations that make it difficult to continuously use the devices for more than one or two weeks without charging due to limitations of battery capacity.

The power consumption of the UE is greatly affected by the time when the UE is awake. For a more improved power saving effect, a longer eDRX cycle may be introduced. Use of such a long eDRX cycle imposes restrictions that are not appropriate for services requiring low latency. As a specific example, a UE, which corresponds to a sensor for fire detection, requires operation of devices necessary for fire suppression (e.g., a sprinkler and a fire shutter) within 1 to 2 seconds from the detection of fire, but a long eDRX cycle may not meet these requirements. Therefore, it is difficult to universally meet the requirements of various devices of the 5G UE by a power saving scheme of increasing the eDRX cycle. Therefore, in future NR, a method of reducing power while ensuring a shorter delay time may be needed.

According to the current NR standard, a UE wakes up periodically once per DRX cycle to monitor a signal. However, if the UE wakes up in an event-triggered manner rather than every cycle, power consumption may be significantly reduced. For example, if a receiver of the UE includes i) a main receiver (e.g., OFDM receiver) and ii) an auxiliary receiver of ultra-low power, and if the auxiliary receiver operates in a manner of waking up the main receiver upon receiving an LP-WUS, power consumed by the main receiver may be greatly reduced. In this case, the main receiver may be used for data transmission and reception, and the UE may operate the main receiver in Off/deep sleep mode while turning on the auxiliary receiver. The power consumption of the auxiliary receiver may vary depending on the design of the LP WUS and the configuration of the auxiliary receiver. For example, the LP-WUS may be designed based on a sequence (e.g., On-Off keying (OOK) sequence) rather than on an information bit (e.g., DCI).

The methods proposed in this specification may include the case in which whether the methods are applied is configured by the BS, unless otherwise stated. For example, whether to apply a corresponding operation may be configured by the BS through a higher layer signal such as an SIB or dedicated RRC signaling or may not be configured.

As an example, the proposals of this specification may be used in a DCI format related to a PEI. However, the present disclosure is not limited thereto and may generally be applied to various signals or channels.

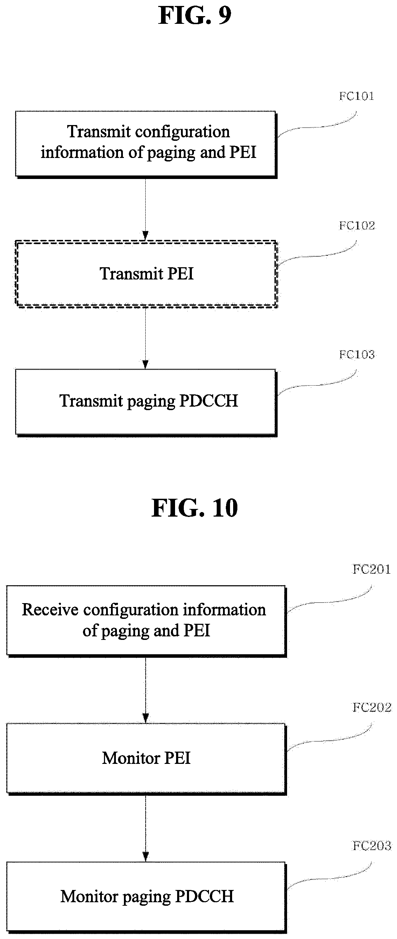

FIG. 9 illustrates a flowchart of operation of a BS according to an embodiment of the present disclosure.

Referring to FIG. 9, the BS may generate configuration information and transmit the configuration information (FC101). In this case, the configuration information may include information related to paging and a PEI, for example, configuration information regarding monitoring locations of a paging PDCCH and the PEI and information included in the paging PDCCH and the PEI. The configuration information may be transmitted, for example, using a higher layer signal (e.g., an SIB or RRC signaling).

Next, the BS may provide specific information by transmitting the PEI to a specific UE (FC 102). In this case, the specific information may include indication information of PO monitoring for the specific UE. If the specific information is configured in step FC101, the specific information may include information related to a short message and/or a TRS availability indication. In this case, step FC 102 may be omitted depending on an embodiment.

Thereafter, if there is information such as a paging message or a short message to be transmitted, the BS may transmit a PDCCH and/or a PDSCH at the location of a PO corresponding to the PEI transmitted in step FC102 or at the location of a predetermined PO (FC103).

FIG. 10 illustrates a flowchart of operation of a UE according to an embodiment of the present disclosure.

Referring to FIG. 10, the UE may receive configuration information and apply the configuration information (FC201). The configuration information may include information related to paging and a PEI, for example, configuration information regarding monitoring locations of a paging PDCCH and the PEI and information included in the paging PDCCH and the PEI. For example, in order to receive the configuration information, the UE may perform a procedure of acquiring a higher layer signal (e.g., an SIB or RRC signaling).

Next, the UE may perform a PEI monitoring operation based on the configuration information received in step FC201 (FC202).

Thereafter, if the UE is instructed to monitor a PO through the PEI in step FC202, or if a proposed condition is satisfied, the UE may receive a PDCCH and/or a PDSCH at the location of a PO corresponding to the monitored PEI or at the location of a predetermined PO (FC203).

**Proposal 1: Operation of UE that acquires information related to SI change indication and/or PWS notification through PEI**

Proposal 1 considers the case in which short message information is provided through a PEI. However, the proposed method is not limited thereto and may be applied even when monitoring of a paging PDCCH for acquisition of a short message, instead of the short message information, is indicated through the PEI, or separate information related to the short message is not included in the PEI. In this case, the short message information may include information regarding an SI change indication and/or a PWS notification of the Rel-16 NR standard. In the TS 38.331 standard of 3GPP Rel-16, operations to be performed by a UE that has obtained the short message at the location of a PO are defined as shown in Table 5 below. In Table 5, procedures are described based on the case in which the UE has obtained the short message in the PO.

[Table 5]

For Short Message reception in a paging occasion, the UE monitors the PDCCH monitoring occasion(s) for paging as

specified in TS 38.304 [20] and TS 38.213 [13].

If the UE receives a Short Message, the UE shall:

1> if the UE is ETWS capable or CMAS capable, the *etwsAndCmasIndication* bit of Short Message is set, and the UE is provided with *searchSpaceSIB1* and *searchSpaceOtherSystemInformation* on the active BWP or the initial BWP:

2> immediately re-acquire the *SIB1*;

2> if the UE is ETWS capable and *si-SchedulingInfo* includes scheduling information for *SIB6*:

3> acquire *SIB6*, as specified in sub-clause 5.2.2.3.2, immediately;

2> if the UE is ETWS capable and *si-SchedulingInfo* includes scheduling information for *SIB7*:

3> acquire *SIB7*, as specified in sub-clause 5.2.2.3.2, immediately;

2> if the UE is CMAS capable and *si-SchedulingInfo* includes scheduling information for *SIB8*:

3> acquire *SIB8*, as specified in sub-clause 5.2.2.3.2, immediately;

NOTE: In case *SIB6*, *SIB7*, or *SIB8* overlap with a measurement gap it is left to UE implementation how to immediately acquire *SIB6*, *SIB7*, or *SIB8*.

1> if the *systemInfoModification* bit of Short Message is set:

2> apply the SI acquisition procedure as defined in sub-clause 5.2.2.3 from the start of the next modification period.

In the case of a PEI-capable UE, an operation to be performed in a PO by monitoring the PEI prior to the PO may be indicated to the UE. The PEI may be determined as a relative position to the PO in which reception of a paging PDCCH may be expected, and there may be a gap for the UE to receive the PEI and prepare for the operation in the PO. In this case, due to the gap, a modification period at a location at which the UE monitors the PEI and a modification period at a location at which the UE monitors the PO may be different.

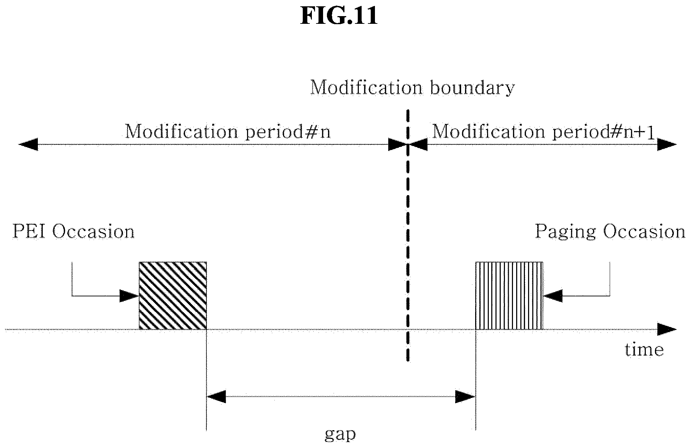

FIG. 11 illustrates an example in which a modification period boundary is located between a PEI and a PO. In the example of FIG. 11, a PEI occasion refers to a location at which the UE monitors the PEI, and modification period numbers (i.e., #n and #n+1) are randomly assigned numbers for convenience of explanation. As shown in the example of FIG. 11, when criteria for modification periods of the PEI and the PO are different, and a short message is provided through the PEI, reference timings for performing subsequent operations may be different between UEs monitoring the PEI and the PO. As a result, ambiguity may occur in a timing when SI update is applied and a timing when the UE receives information about SI change, which may lead to problems such as missing SI update information or unnecessary power consumption of the UE.

**Proposal 1-1: Method of performing subsequent procedures based on location of PO associated with received PEI when UE acquires short message information through** PEI

A method is proposed in which the UE that has received the PEI performs procedures related to the short message based on the location of a PO associated with the PEI. Specifically, if the UE receives the PEI and receives the short message (e.g., SI change indication and/or PWS notification) through information included in the PEI, the UE may perform subsequent procedures for the short message based on a PO timing associated with the received PEI.

As a specific example, if one bit indicating the status of systemInfoModification defined in the TS 38.331 standard document is included in the PEI and if the UE is instructed to perform an SI acquisition procedure through the one bit (e.g., when the one bit indicates the value of 1) by receiving the PEI, the UE may perform an SI acquisition procedure in the next modification period based on a modification period of a PO associated with the PEI received by the UE. For example, in the example in FIG. 11, if the PO associated with the PEI is located in modification period #n+1, the UE performs the SI acquisition procedure at the location of the next modification period (i.e., modification period #n+1).

As another specific example, if one bit indicating the status of etwsAndCmasIndication defined in the TS 38.331 standard document is included in the PEI and if an ETWS/CMAS-capable UE is informed that the one bit indicates presence of PWS notification information (i.e., when the one bit indicates the value of 1) by receiving the PEI, the UE may immediately perform an SIB 1 re-acquisition procedure starting from the location of the PO associated with the received PEI. For example, in the example of FIG. 11, upon confirming the above information in a PEI occasion, the UE may perform the SIB1 re-acquisition procedure staring from the location of the PO associated with the PEI (or starting from the location at which the PO ends).

The proposed method may be useful in preventing the UE from performing an unnecessary SI acquisition procedure or determining that SI acquisition has failed, by clearly defining a timing when the BS provides changed SI information. In particular, even in the case of the PEI-capable UE, PEI monitoring may not be mandatory. Since there may be the case in which PEI monitoring is not possible due to certain conditions or PO monitoring is performed without the PEI due to the implementation of the UE, it may be advantageous in reducing ambiguity between the BS and the UE to determine a timing providing information based on the PO which may be commonly assumed by all UEs. In addition, since modified SI information or PWS information may be provided based on a single timing, PO-based information provision may be advantageous in preventing the problem of increased network overhead caused by repeated transmission of the same information by the BS.

**Proposal 1-2: Method of performing subsequent procedures based on location of received PEI when UE receives short message information through PEI and acquires PWS notification information through short message information**

In order to solve the problems mentioned above and allow delivery of an urgent message to the UE, a method of performing procedures related to an ETWS/CMAS based on the location of the PEI when the UE that has received the PEI acquires information of a PWS notification is proposed.

As a specific example, if one bit indicating the status of etwsAndCmasIndication defined in the TS 38.331 standard document is included in the PEI and if the ETWS/CMAS-capable UE is informed that the one bit indicates presence of PWS notification information (i.e., when the one bit indicates the value of 1) by receiving the PEI, the UE may immediately perform an SIB 1 re-acquisition procedure after confirming the information. For example, in the example of FIG. 11, upon confirming the above information in the PEI occasion, the UE may perform the SIB 1 re-acquisition procedure starting from the location of the PEI (or starting from the location at which the PEI ends).

The proposed method may aim at reducing delay in providing information about an emergency/disaster situation. Proposal 1-1 may be an advantageous method in terms of network overhead of the BS but causes delay of providing information corresponding to the size of a gap between the PEI and the PO. This may not fit well with the characteristics of the PWS, which should deliver an urgent message. If proposal 1-2 is applied to provision of the PWS notification information through the PEI, and the PEI includes information about the SI change indication, a timing at which the UE starts the SI acquisition procedure after the SI change indication may also be determined based on Proposal 1-1.

**Proposal 2: Method of determining monitoring location of PO by UE to which PDCCH monitoring-only operation is indicated in PO through PEI**

Proposal 2 considers the case in which information indicating a PDCCH monitoring-only operation (i.e., decoding only a PDCCH without expecting scheduling of a PDSCH) in a PO is provided through a PEI. For example, the PDCCH monitoring-only operation may be used to instruct the UE to receive a short message at the location of the PO when the short message is not directly provided through the PEI. However, the proposed method is not limited thereto and may also be applied when the PDCCH monitoring-only operation is used for the purpose of acquiring information (e.g., TRS availability indication) other than the reception of the short message. In this case, information of the short message may include information about an SI change indication and/or a PWS notification based on the Rel-16 NR standard.

In order to increase power saving gain due to the PEI, a gap of a sufficient size needs to be configured between a PEI occasion and a PO. This may be for the purpose of ensuring that, when the UE is instructed to schedule a PDSCH starting from the PO after receiving the PEI, the UE may monitor one or more SSBs in order to satisfy the level of time/frequency synchronization for guaranteeing PDSCH decoding performance. In general, as the size of the gap increases, the more opportunities for SSB monitoring may be provided to the UE. Therefore, while power saving gain and stable decoding of the PDSCH due to the PEI may be guaranteed, if the UE is instructed to expect reception of a paging message through the PEI, there may be a disadvantage in that a micro/light sleep duration becomes longer depending on the size of the increased gap, which may deteriorate power consumption gain. In particular, in the case of a UE that has been instructed to perform the PDCCH monitoring-only operation through the PEI and has not been instructed to receive the paging message (i.e., a UE that has not been indicated to expect PDSCH scheduling information in the PO through a UE subgroup indication field of the PEI), if the UE performs PDCCH decoding at the location of the PO associated with the PEI, power may be wasted in that unnecessary micro/light sleep may occur.

Unlike the paging message provided with respect to a specific UE ID, updated SI information or ETWS/CMAS information is information provided to all UEs that expect to receive paging from the BS. Therefore, the BS needs to transmit the same information repeatedly at the locations of different POs. A method of reducing unnecessary power consumption consumed to maintain a micro/light sleep duration by the UE that has received the PEI is proposed using the characteristics of the short message.

**Proposal 2-1: Method of attempting to receive DCI format 1 0 with CRC scrambled by P-RNTI at location of PO-A by UE when UE is instructed to perform PDCCH monitoring-only operation through PEI**

A method is proposed of performing, by the UE, PDCCH monitoring without expecting PDSCH scheduling at the location of pre-arranged PO-A when the UE that has received the PEI performs the PDCCH monitoring-only operation. In this case, the UE may be configured not to expect reception of a PDSCH even when confirming PDSCH scheduling information at the location of PO-A. In determining the location of PO-A, at least one of options below may be used.

Option 2-1-1) In general, the location of PO-A may be the location of an associated PO in which the UE receiving the PEI may expect scheduling of a PDSCH. This may be a natural operation when no other PO is located between the PEI and the PO and may be used as a default option that operates when separate configuration information specifying another option is not provided.

Option 2-1-2) The location of PO-A may be the location of a PO closest to the location of the PEI received by the UE. In this case, if there are POs expected by another UE group between the PEI and the associated PO, the UE may determine a PO closest to the PEI among these POs as PO-A and perform a PDCCH monitoring-only operation. If one PEI corresponds to multiple POs (e.g., when there are multiple UE groups expecting to receive information through the PEI), a corresponding operation may be determined to be applied without separate signaling. Otherwise, a method of using the location of the associated PO (e.g., operation of Option 2-1-1) may be applied. This is an advantageous effect in increasing power saving efficiency of the UE by allowing the UE to enter deep sleep mode immediately after receiving the short message at the location of the nearest PO when the UE is not instructed to schedule the paging message after receiving the PEI.

Option 2-1-3) The location of PO-A may be the location of a predetermined PO (e.g., configured by the BS or defined by the standard). In this case, the location of the predetermined PO may be determined cell-commonly, and multiple UE groups may share the location of PO-A according to the same rule. This method may be expected to have an advantageous effect in terms of network overhead reduction of the BS. Considering the purpose of power saving, the UE may determine a closer PO among PO locations associated with the predetermined PO location as PO-A and expect to receive a PDCCH.

The methods proposed in the above options are not limited to PO-A determination and may be applied in units of PDCCH monitoring occasions constituting the PEI and the PO. The proposed methods may be used as a criterion for selecting an available PDCCH monitoring occasion for paging purposes based on a beam direction of the PEI detected by the UE. When the monitoring locations of a PEI PDCCH constituting a PEI occasion are defined as PEI-PDCCH monitoring occasions (MOs), and the monitoring locations of a paging PDCCH constituting the PO are defined as paging-PDCCH MOs, the UE may apply the proposed methods in a PEI occasion based on the locations of paging-PDCCH MOs having the same beam characteristics with respect to PEI-PDCCH MOs in which the PEI is detected. In this case, the same beam characteristics may mean that different PDCCH MOs are associated with the same SSB index or that the same QCL assumption is applied to the same SSB. For example, when the same beam characteristics are applied to Option 2-1-1, the UE may be configured to select a PDCCH MO having the same beam characteristics as the PEI detected by the UE among PDCCH MOs of the location of the PO associated with the PEI. When the same beam characteristics are applied to option 2-1-2, the UE may be configured to select the closest location among paging-PDCCH MOs having the same beam characteristics as the PEI detected by the UE. When the same beam characteristics are applied to Option 2-1-3, the UE may select a location at which a paging-PDCCH MO having the same beam characteristics as the detected PEI is available among the location of a predetermined PO and the location of an associated PO. This method may be useful when whether the UE wakes up in a paging-PDCCH MO having the same beam characteristics upon detecting the PEI is indicated to the UE.

Proposal 2-1 may be applied only when the UE has not received an indication of information through which the UE may expect to receive the paging message (e.g., UE subgroup indication) through the PEI. If the UE is indicated to expect reception of the paging message through the PEI, the UE may monitor the PDCCH at a PO associated with the PEI (i.e., the location of a PO configured by a paging procedure) and expect to receive the PDSCH.

The proposed method may improve power saving gain by switching the UE to deep sleep mode within a relatively quick time when the UE that has received the PEI wants to acquire information provided through the paging PDCCH such as the short message. Additionally, some options have the effect of reducing the network overhead of the BS.

**Proposal 3: Method of determining that UE that expects to receive PEI monitors PO without instruction of PEI under certain specific conditions**

The method proposed in Proposal 3 may be used when a PEI may indicate that a PDCCH may be monitored in an associated PO and a PDSCH may be scheduled. In this case, the PEI does not exclude the case of including other information in addition to a wake up indication in the associated PO. For example, the principle of the proposed method may be applied to a PEI including short message information, TRS availability indication information, and/or PDCCH monitoring-only information. In this case, specific forms or conditions under which the method is applied may differ depending on the information included in the PEI.

In general, a UE that supports the PEI may be configured not to monitor the PO when the PEI is not received, unless a separate operation is specified. In this case, in order for a PEI-capable UE to acquire the short message information, a process of receiving the PEI may be necessary even when the PEI includes the short message information or does not include related information. In this case, a BS supporting the PEI may need to transmit both the PEI and a paging PDCCH in order to provide the short message information to both PEI-capable UEs and PEI non-capable UEs. This may cause an increase in overhead from the perspective of the BS, resulting in consumption of the power of the BS and radio resources. From another perspective, if traffic temporarily increases and the BS has difficulty scheduling PEI transmission or the UE misses the PEI, the opportunity for the PEI-capable UEs to acquire the short message may decrease.

**Proposal 3-1: Method of determining that UE expecting to receive PEI monitors PO without indication of PEI at least once during pre-designated duration**

In order to solve the above-mentioned problems, a method such as Proposal 3-1 is proposed in which a UE that expects to receive the PEI is configured to monitor the PO even without indication of the PEI at least once during a specific pre-designated duration (hereinafter duration-B). In this case, duration-B may be determined as a modification period or a multiple of a default paging cycle. This may be for the purpose of allowing the UE to monitor the PO at a certain period in consideration of a paging cycle, which is a basic unit of paging performed by the UE, and may be suitable for the purpose of smoothly supporting an SI update procedure operation using a modification period, which is a reference for updating SI information, as a unit.

In this case, the location of a PO that the UE may monitor without receiving the PEI may be determined as the location of a predetermined PO (e.g., configured by the BS or defined by the standard) (hereinafter PO-B). This may serve to achieve network overhead saving gain by eliminating the need for the BS to repeatedly transmit a PDCCH at the locations of all POs. From the perspective of the UE, this increases the probability of receiving the PDCCH at the location of the PO, thereby increasing the possibility of stably acquiring information. The location of PO-B may be determined as a relative position within each duration-B. For example, the location of PO-B may be determined as the location of an n-th PO expected by the UE in duration-B (e.g., the location of the last PO).

Specifically, a UE expecting to receive the PEI may perform PDCCH decoding expecting to receive a paging PDCCH at the location of PO-B in units of duration-B. In this case, the PDCCH decoding operation may be determined to be performed regardless of whether the PEI is received at the location of the PEI corresponding to the location of PO-B. This means that, when the UE receives the PEI at the location of the PEI corresponding to PO-B, the UE performs an operation for monitoring the location of an associated PO according to an existing PEI reception procedure. Additionally, this means that the UE may perform an operation for monitoring a paging PDCCH at the location of PO-B even when the UE fails to receive the PEI at the location of the PEI corresponding to PO-B.

The proposed method has a technical effect of giving the UE the opportunity to provide information that may be provided through the PO even without transmitting or receiving the PEI by forcing the UE to periodically monitor the location of the PO at least once. This gives the BS an opportunity to omit transmission of the PEI, which may be necessary to provide information (e.g., short message, TRS availability indication, etc.) other than the wakeup indication information (or wake-up indication information for each UE subgroup) to the UE, thereby obtaining gain of network overhead saving. In addition, even if the UE fails to receive the PEI, since a PO monitoring opportunity is provided, the proposed method may provide gain of periodically guaranteeing the opportunity to receive information of UEs located in coverage of a low SINR.

**Proposal 3-2: Method in which UE is configured not to expect reception of PDSCH at monitoring timing of PO when (Proposal 3-1 is applied and) the UE monitors PO without indication of PEI**

When Proposal 3-1 is applied and the UE is provided with the opportunity to monitor the PO without receiving the PEI, a method of determining that the UE does not expect to receive a PDSCH at the location of the PO that the UE monitors without receiving the PEI is provided. If there is a paging message to be transmitted to the PEI-capable UE, the BS may instruct the UE to wake up through the PEI, and the UE that has received the wake-up indication may expect to receive information of PDSCH scheduling at the location of a PO associated with the received PEI. In this case, the UE should decode the paging PDCCH at the location of the PO and simultaneously store received signals of potential PDSCH REs in a buffer at the locations of OFDM symbols and PRBs in which the PDSCH may be transmitted. This operation should be performed regardless of whether the REs stored in the buffer have actually been used for PDSCH transmission. If the PDSCH is not scheduled at the location of the corresponding PO, this operation causes unnecessary power consumption of the UE.

In order to solve the above problem, in a situation in which Proposal 3-1 is applied, a method may be used in which received information expected at the location of a PO (hereinafter PO-C) at which the UE may expect to monitor the PO even without receiving the PEI differs depending on whether to receive the PEI. Specifically, if the UE receives the PEI at the location of the PEI associated with PO-C and receives a wake-up indication for the UE, the UE may receive a paging PDCCH at the location of the PO associated with the PEI according to a general PEI reception procedure and expect to schedule a PDSCH. On the other hand, if the UE fails to receive the PEI at the location of the PEI associated with PO-C, or receives the PEI but fails to receive the wake up indication for the UE, the UE may perform monitoring of the paging PDCCH at the location of PO-C. In this case, PDSCH scheduling in the corresponding PDCCH may not be expected.

The proposed method may cause benefits in that the method may reduce unnecessary power consumption of the UE due to PDSCH buffering performed at the location of the PO when there is no paging message to be provided to the UE. In addition, since the expectations of scheduling information for the PDSCH are applied differently depending on the reception conditions of the PEI, the proposed method has the advantage of maintaining the opportunity to transmit and receive the paging message at the same level as the existing paging procedure since the BS may determine whether to schedule the PDSCH when necessary.

**Proposal 3-3: Method in which UE determines whether to perform PO monitoring without indication of PEI only in situation in which certain conditions are satisfied (when Proposal 3-1 is used)**

When Proposal 3-1 is applied and the UE is provided with the opportunity to monitor the PO without receiving the PEI, a method of performing monitoring of the PO even without receiving the PEI only when the UE satisfies certain conditions is provided. If Proposal 3-1 is used and the location of PO-B is specified so that the location at which the UE may obtain information in the PO even without monitoring the PEI is limited, the frequency of occurrence of PO-B may be determined according to the size of duration-B. If the size of duration-B is set to be small, the power saving effect due to the PEI may be reduced because the number of POs that should be monitored increases regardless of whether the UE transmits or receives the PEI. Conversely, if the size of duration-B is set to be large, the power saving effect of the UE may be relatively increased, but the opportunity to provide information related to the short message and/or the TRS availability indication without the PEI will be relatively reduced, thereby increasing latency of information provision and deteriorating scheduling flexibility of the BS. Additionally, if the PEI or the paging PDCCH has already been transmitted at the location of a PO other than PO-B or the location of a PEI not associated with PO-B within duration-B, the BS may have an opportunity to transmit necessary information at the above transmission locations. From the perspective of the UE, unnecessary power consumption may occur due to monitoring of PO-B in order to additionally receive information that has already been provided.

In order to solve the above problems, a method is proposed in which the UE performs a PO monitoring operation allowed even without indication of the PEI applied according to Proposal 3-1 only when a specific condition is satisfied. A detailed method for the above specific condition may be used in combination with one or more of options below.

Option 3-3-1) The above specific condition may be the case in which the UE has never successfully received the PEI (or reception of a PDCCH through a PO) during duration-B. Specifically, the UE may be configured to monitor PO-B even without receiving the PEI when the PEI-capable UE fails to receive the PEI until before PO-B in a specific duration of duration-B (or at a transmission/reception location of the PEI corresponding to a PO belonging to duration-B) (and when the UE fails to receive a PDCCH in a PO before PO-B). On the other hand, when the PEI-capable UE receives the PEI at least once before PO-B appears within a specific duration of duration-B (or receives the PDCCH in the PO before PO-B), the UE may be configured to monitor the PO only upon receiving the PEI during the remaining specific duration of duration-B, in other words, may be configured not to expect reception of the PDCCH in PO-B without receiving the PEI.

Option 3-3-2) The specific condition may be the case in which the UE has never received specific information through the PEI (or a PDCCH transmitted in the PO) during duration-B. In this case, the specific information may be information related to the short message and/or the TRS availability indication. Specifically, when the PEI-capable UE fails to receive the PEI until before PO-B (or at the transmission/reception location of PEIs corresponding to POs belonging to duration-B), or receives the PEI but fails to receive SI change indication information or PWS notification information indicated by the short message through the PEI, the UE may be configured to monitor PO-B even without receiving the PEI. On the other hand, when the PEI-capable UE receives the PEI (or receives the paging PDCCH in the PO) before PO-B appears within a specific duration of duration-B and receives the SI change indication information or the PWS notification information indicated by the short message, the UE may be configured to monitor the PO only upon receiving the PEI during the remaining specific duration of duration-B, in other words, may be configured not to expect reception of the PDCCH in PO-B without receiving the PEI.

Since the proposed method is highly likely to have received necessary information when the UE has already received the PDCCH through the PEI occasion or the PO, the proposed method may achieve power saving gain by omitting an unnecessary PO monitoring operation. Additionally, from the perspective of the BS, when information such as the short message has already been provided to the UE through the PEI or the PO, this may be advantageous in terms of reducing network overhead because there is no need to retransmit the information again at the location of PO-B.

## TRS Availability Indication

Hereinafter, methods of transmitting and receiving information about reference signals through DCI and applying the same will be proposed when the information about the reference signals for which transmission and reception may be assumed is provided to an idle/inactive mode UE.

In LTE, synchronization signals (i.e., PSS/SSS) are transmitted at an interval of 10 ms, and a structure in which a CRS is transmitted in almost all subframes and PRBs is provided. Therefore, when the UE desires to perform time/frequency synchronization, tracking, or measurement, the structure makes it easy to utilize the above always-on reference signals. In the case of NR, the UE may utilize, based on Rel-16, an SSB for the purpose of measurement and the purpose of time/frequency tracking in idle/inactive mode. However, since a basic transmission interval of the SSB including an SSS that may be used for the measurement purpose is 20 ms, and there is no always-on reference signal that may be used like the CRS, an unnecessary wake-up situation of the UE may frequently occur or time/frequency tracking performance may be relatively deteriorated. In communication systems such as LTE and NR, paging is used for purposes such as triggering of RRC setup, system information modification, and/or PWS/ETWS notification. When the UE monitors a PDCCH at a location of a PO configured by the BS and detects DCI scrambled by a P-RNTI, the UE performs an operation indicated by the DCI.

Based on Rel-16 NR, a CSI-RS is a reference signal that may be used for CSI estimation, beam management, time-frequency tracking, etc., and a TRS is a reference signal that may be configured to support estimation of delay spread and Doppler spread while improving time/frequency tracking performance. The TRS/CSI-RS is information configured for the UE through RRC signaling in connected mode, and transmission of the TRS/CSI-RS may not be expected in idle/inactive mode. In Rel-17 NR, methods are being discussed to reuse the existing TRS/CSI-RS transmission and structure so that UEs in idle/inactive mode may assume reception of the TRS or CSI-RS. These methods may be used for time/frequency tracking of UEs in idle/inactive mode to improve power consumption efficiency. The methods proposed below use the term TRS to describe concepts and methods applied to the TRS or the CSI-RS, and the term TRS may be replaced with the term CSI-RS.

The TRS provided for idle/inactive mode UEs discussed in Rel-17 NR may be provided by separating a configuration and an availability indication in order to prevent the type of an always-on signal. In this case, the configuration refers to a configuration of the BS for parameters related to generation of a TRS resource and parameters for configuring TRS occasion(s) in which the TRS is likely to be transmitted. In addition, the availability indication refers to provision of information indicating whether the UE that has received configuration information may actually assume transmission of the TRS on TRS occasion(s) for which a TRS resource is configured. If the BS indicates that the TRS is available in specific TRS occasion(s) through the availability indication, the UE may assume this and perform a TRS reception operation. Otherwise (e.g., when the availability indication is not provided, information indicated by the availability indication is terminated, or the availability indication is received but the indication indicates that the TRS is not available), the UE may not assume reception of the TRS at the locations of TRS occasion(s) associated with the availability indication.

As one method of providing the availability indication to idle/inactive mode UEs, a method of using paging DCI is being discussed. The paging DCI should be monitored by the idle/inactive mode UEs at a periodicity of a paging DRX cycle in order to receive a paging message and a short message and prevents additional power consumption from occurring because the UE may receive additional information through the existing procedure. As available bit resources in the paging DCI that may be used to transmit and receive TRS availability information, 6 bits designated always as reserved bits (in the case of shared spectrum channel access, 8 bits based on the Rel-16 NR standard), regardless of the conditions of a short message indicator, and regions designated as reserved bits depending on conditions within the short message may be used. Hereinafter, for convenience of explanation, the region of a bit field designated as the reserved bits regardless of the short message indicator is defined as A-field, and the region of a short message field is defined as B-field. In addition, the term C-field is defined and used as the term to express fields composed of general reserved bits, including A-field and B-field. Table 6 below is an excerpt from the TS38.212 standard document regarding information transmitted and received by the paging DCI.

[Table 6]

| The following information is transmitted by means of the DCI format 1_0 with CRC scrambled by P-RNTI: |
|---|
| - Short Messages Indicator - 2 bits according to Table 7.3.1.2.1-1. |
| - Short Messages - 8 bits, according to Clause 6.5 of [9, TS38.331]. If only the scheduling information for Paging is carried, this bit field is reserved. |
| - Frequency domain resource assignment - $\left\lceil \log_2(N_{RB}^{DL,BWP}(N_{RB}^{DL,BWP}+1)/2) \right\rceil$ bits. If only the short message is carried, this bit field is reserved. |
| - $N_{RB}^{DL,BWP}$ is the size of CORESET 0 |
| - Time domain resource assignment - 4 bits as defined in Clause 5.1.2.1 of [6, TS38.214]. If only the short message is carried, this bit field is reserved. |
| - VRB-to-PRB mapping - 1 bit according to Table 7.3.1.2.2-5. If only the short message is carried, this bit field is reserved. |
| - Modulation and coding scheme - 5 bits as defined in Clause 5.1.3 of [6, TS38.214], using Table 5.1.3.1-1. If only the short message is carried, this bit field is reserved. |
| - TB scaling - 2 bits as defined in Clause 5.1.3.2 of [6, TS38.214]. If only the short message is carried, this bit field is reserved. |
| - Reserved bits - 8 bits for operation in a cell with shared spectrum channel access; otherwise 6 bits |

The reserved bit resources in the paging DCI are resources reserved to provide relevant information when a new function that is not currently provided is introduced and are configured to ensure compatibility between a legacy UE and a new UE. From this perspective, when the TRS availability indication is newly introduced, using the reserved bits may be appropriate. However, the number of reserved bits included in the paging DCI is limited, and if there is a large amount of TRS availability indication information that should be provided separately, a method of efficiently using the reserved bits needs to be considered. For example, the case in which the amount of TRS availability indication information to be provided is greater than the amount of information that may be provided as the reserved bits may be considered. Alternatively, if most reserved bits are used for the purpose of the TRS availability indication, an issue of forward compatibility that limits the amount of information available for new functions to be introduced later needs to be considered.

From another perspective, in the case of B-field, it should be considered that the number and availability of available reserved bits may vary depending on the status of the short message indicator. The short message indicator is a 2-bit size field configured by the paging DCI, and according to the information expressed by bits, four states are distinguished as shown in Table 7 below, as described in the TR38.212 standard document. Therefore, this means that the size of information provided in the B-field may vary depending on conditions. If TRS availability indication information is provided through the B-field, a method of providing stable information to the UE by minimizing restrictions due to conditions needs to be considered.

[Table 7]

| Bit field | Short Message indicator |
|-----------|-------------------------|
| 00 | Reserved |
| 01 | Only scheduling information for Paging is present in the DCI |
| 10 | Only short message is present in the DCI |
| 11 | Both scheduling information for Paging and short message are present in the DCI |

In order to solve these problems, methods of determining the content and configuration scheme of the TRS availability indication information configured by the paging DCI and acquiring, by the UE, information through the determined content and configuration scheme are proposed. The proposed methods may be useful in increasing the power saving efficiency of the UE, and at the same time may provide efficient use gain of bits in the paging DCI.

Hereinbelow, while the proposed methods will be described based on the TRS that the BS may transmit for the idle/inactive mode UEs, the proposed method may also be applied to various types of signals/channels.

Hereinbelow, while the proposed methods will be described based on application to the paging DCI and reserved bits included therein, the present disclosure is not limited thereto and may also be applied to other DCI formats and DCI fields included therein.

As an example, the methods proposed below may be used to receive/apply the TRS/CSI-RS availability information based on TRS/CSI-RS configuration information. However, the present disclosure is not limited thereto and may be generally applied to various signals or channels.

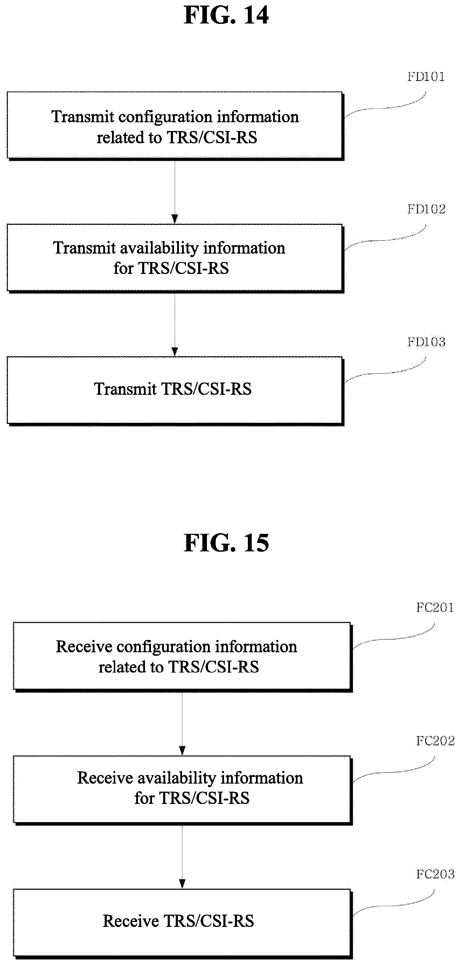

FIG. 14 illustrates a flowchart of operation of a BS according to an embodiment of the present disclosure.

The BS may generate configuration information related to a TRS/CSI-RS and transmit the configuration (FD101). For example, the configuration information may be transmitted through a higher layer signal (e.g., an SIB or RRC signaling).

Additionally, the BS may generate availability information for the TRS/CSI-RS and transmit the availability information (FD102). In this regard, the operation of FD102 may be performed using a PDCCH (e.g., transmission of paging DCI), and in this case, the operation of FD102 may be performed after FD101.

The BS may transmit the TRS/CSI-RS according to the transmitted configuration information related to the TRS/CSI-RS and the transmitted availability information for the TRS/CSI-RS (FD103).

FIG. 15 illustrates a flowchart of operation of a UE according to an embodiment of the present disclosure.

The UE may receive configuration information related to a TRS/CSI-RS from the BS (FD201). For example, the configuration information may be received through a higher layer signal (e.g., an SIB or RRC signaling).

Thereafter, the UE may receive availability information for the received configuration information of the TRS/CSI-RS from the BS (FD202). In this case, if the availability information is transmitted through a PDCCH (e.g., transmission of paging DCI), the UE may attempt to detect the PDCCH.

Thereafter, the UE may perform a reception operation assuming that the BS will actually transmit the TRS/CSI-RS according to the received configuration information of the TRS/CSI-RS and the received availability information of the TRS/CSI-RS (FD203).

**Proposal 4: Method of determining TRS resource** set **indicated for each PDCCH monitoring occasion**

Proposal 4 proposes a method of determining TRS resource set(s) for which an availability indication may be indicated in each PDCCH monitoring occasion constituting a PO. The TRS resource set refers to a minimum unit in which the availability indication may be indicated, and may be composed of a set of one or more TRS resources. For example, one bit in a DCI field may provide availability indication information for one TRS resource set. In NR, one or more PDCCH monitoring occasions (hereinafter PDCCH MOs) may be configured in one PO for a multi-beam operation. In this case, the QCL relationship of the PDCCH MOs with SSBs is determined according to a predetermined criterion as defined in the TS 38.304 and TS 38.213 standard documents. Likewise, the QCL relationship with SSBs provided in the same cell may be defined for transmission and reception of the TRS provided for the idle/inactive mode UEs.

The maximum number of SSBs (hereinafter Lmax) that may be transmitted by the BS is determined by the frequency range over which the SSBs are transmitted. Lmax = 4 is used in a range of 3 GHz or less, Lmax = 8 is used in a range of 3 to 6 GHz, and Lmax=64 is used in a range of 6 to 52.6 GHz. If the TRS resource set consists of TRS resources with the same beam direction (e.g., when QCL assumption for the SSB specifies the TRS resource set as a unit), up to Lmax TRS resource sets may be required. Considering resources of available reserved bits of the paging DCI, this may greatly reduce the bit use efficiency of the paging DCI. Furthermore, depending on a situation, it may be impossible to express the availability indication for all TRS resource sets. Even when the TRS resource sets have different beam directions, configuring multiple TRS resource sets may be advantageous in order to increase scheduling flexibility of the BS. Even in this case, the issue of efficiency may be considered due to the limitation on the number of TRS resource sets through which the availability indication is indicated and the number of bits in the paging DCI used for this purpose.

In order to solve the above problems, a method of determining the relationship of provision of availability indication information between the paging DCI and the TRS resource set is proposed. Specifically, when there is a total of N TRS resource sets, information of which is configured by the BS and provided to the UE through the paging DCI, an availability indication for M TRS resource sets is determined to be provided in PDCCH MOs constituting a PO. Here, M may be smaller than or equal to N. In this case, if the availability indication in a bitmap form is provided through the paging DCI, a TRS availability indication field of a total of M bits may be configured in the paging DCI.

Additionally, information transmitted and received through the TRS availability indication field configured in the paging DCI may be determined according to the order or location of each PDCCH monitoring occasion in which the paging DCI is transmitted and received, or the QCL relationship with the SSB. For example, the availability indication information that the UE may expect in an n-th PDCCH MO within the PO may be different from the availability indication information that the UE may expect in an m-th (where m≠ n) PDCCH MO.

In order to determine M TRS resource sets among N TRS resource sets and map the M TRS resource sets to PDCCH MOs, . At least one of options below may be used/combined.

Option 1-1) The association between each PDCCH MO and a TRS resource set may follow a rule predetermined by the standard. For example, the above predetermined rule may be determined using the total number N of TRS resource sets, a sequence number $N_{IDX}$ of a TRS resource set, the number M of TRS resource sets corresponding to PDCCH MOs, the number L of PDCCH MOs, and/or a sequence number $L_{IDX}$ of a PDCCH MO.

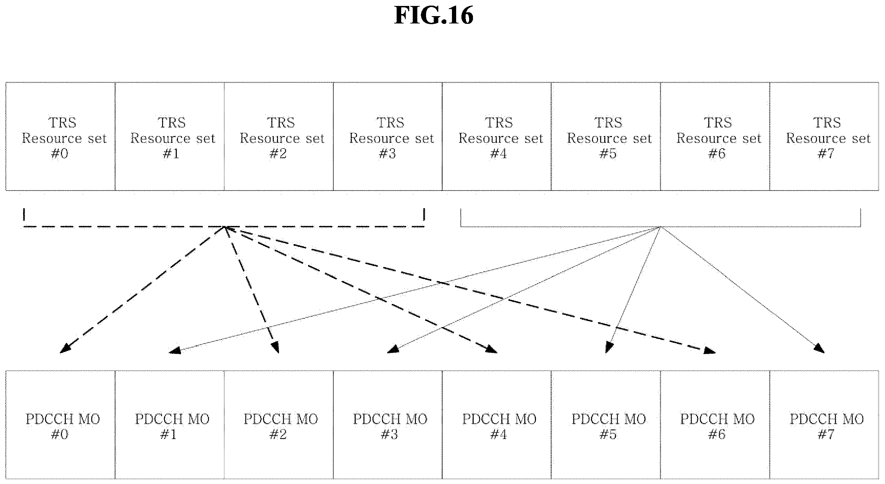

FIG. 16 illustrates an example of a method in which the index of a TRS resource set corresponding to each PDCCH MO is determined according to a predefined rule when N = 8, M = 4, and L = 8. In FIG. 16, the first M TRS resource sets correspond to the even-numbered PDCCH MOs, and the last M TRS resource sets correspond to the odd-numbered PDCCH MOs. As a general form generating the same structure, the method may also be expressed as a condition that satisfies the equation: $L_{IDX}$ mod ceil(N/M) = floor ($N_{IDX}$/M).

Option 1-2) The association between each PDCCH MO and a TRS resource set may be determined by the BS and follow information of a transmitted higher layer signal. Specifically, a configuration for the TRS resource set may include information about the PDCCH MO in which an availability indication may be delivered. Alternatively, a separate IE specifying the relationship between the TRS resource set and the PDCCH MO may be determined to be present in the configuration information for the TRS, and the provision relationship of the availability indication may be defined through explicit information expressed by the corresponding IE.

Proposal 4 may increase the efficiency of DCI overhead in that bit resources required for the paging DCI for the availability indication may be saved. Even when the number of available reserved bits in the paging DCI is insufficient, information about all TRS resource sets that require the availability indication may be advantageously provided. Additionally, from the perspective of the BS, scheduling flexibility for TRS transmission may be increased by configuring more TRS resource sets.

**Proposal 5: Method of determining availability indication information configured in A-field and B-field**

In Proposal 5, when all or part of bits included in A-field and B-field of the paging DCI are used for the purpose of the availability indication, a method of determining information configured in each field and receiving, by the UE, the information is proposed. In this case, A-field refers to a separate field composed of reserved bits configured in the paging DCI as described above, and B-field refers to a field for the purpose of transmitting the short message configured in the paging DCI as described above.

A-field is defined as being always reserved regardless of the type of information provided by the paging DCI based on the Rel-16 NR standard. When A-field is used for the purpose of the availability indication for TRS occasion(s), UEs expecting the availability indication may always expect a certain amount of information. On the other hand, in the case of B-field, the amount of information and the number of reserved bits vary depending on status expressed by a short message indicator included in the same paging DCI based on the Rel-16 NR standard. For example, if a short message indicator field indicates status of '00' or '01', the UE may assume that all of B-field may be used as the reserved bits. In contrast, if the short message indicator field indicates status of '10' or '11', the UE may assume that a part of B-field may be used for an SI change indication and a PWS notification. Since such changes in the status of the short message indicator are information that may not be predicted by both the BS and the UE, the flexible information amount of B-field may not be suitable for providing stable availability indication information. However, when providing availability indication information through the paging DCI, it is necessary to consider using the both types of fields to configure more available TRS resources and ensure high scheduling flexibility of the BS.

Considering the characteristics of each field as described above, methods of distinguishing between information provided by A-field and information provided by B-field from each other and processing, by the UE, the information are proposed. For a detailed method, one of options below may be used, or two or more options may be used in combination.

Hereinafter, a description will be given by defining a set of bits for the availability indication configured in A-field as A-indication and a set of bits for the availability indication configured in B-field as B-indication. Additionally, a TRS resource set described below refers to a minimum unit in which the availability indication may be indicated and may be composed of a set of one or more TRS resources.

Option 2-1) A field in which the availability indication for each TRS resource set may be indicated may be designated through a higher layer signal. For this purpose, configuration information for the TRS resource set configured through the higher layer signal may include bit position information through which the availability indication may be indicated, i.e., information that may distinguish between A-indication and B-indication. A-indication may be assigned an availability indication that is used frequently or indicates a relatively short duration (e.g., a resource location on a timer domain defined by a duration, a window, or a timer), while B-indication may be assigned an availability indication that is used relatively less frequently or indicates a relatively long duration. For example, a method of using a duration in which the availability indication is valid may be used as a criterion for specifying availability indications included in specific A-indication and B-indication.

Option 2-2) Instead of allowing the TRS resource set indicated through the higher layer signal to be indicated by both A-indication and B-indication, a duration in which the availability indication is valid may be applied differently depending on the location of an indicated field. In this case, the proposed method does not limit the case in which the availability indication is provided only by either A-indication or B-indication for some TRS resource sets and may be selected by the BS. When the BS specifies different valid durations of the availability indication for the same TRS resource and occasion, the BS may provide configuration information through a method of configuring a single TRS resource set and specifying the relationship between the TRS resource set and a field providing the availability indication. This may be advantageous in reducing unnecessary signaling overhead. For example, the valid duration length of the availability indication applied when indicated by A-indication and the valid duration length of the availability indication applied when indicated by B-indication may be configured as common information among all TRS resource sets, and the BS may provide the common information through the higher layer signal. For this purpose, configuration information for the TRS resources and occasions configured through the higher layer signal may include bit location information through which the availability indication may be indicated, i.e., information that may distinguish between A-indication and B-indication. Some TRS resource sets may be configured so as to be indicated by both A-indication and B-indication.

Option 2-3) A method of selecting a TRS resource set through A-indication and adjusting a valid duration of the availability indication through B-indication may be used. In this case, when B-indication is not available (e.g., when it is difficult to use a short message field area for the purpose of the availability indication of a TRS by the indication of the short message indicator) and availability indication information is provided only through A-indication, the length of a predefined basic valid duration of the availability indication may be applied. Through the higher layer signal, the BS may provide the UE with information about valid duration values that may be indicated by B-indication. If the information is not provided, the UE may follow the list of valid duration values predefined by the standard. Additionally, if it is desired to differently indicate a valid duration value for each TRS resource set, an area of A-indication may be composed of sub-areas divided into the number of TRS resource sets that desire to indicate valid duration values, and the sub-areas may provide valid duration values for corresponding TRS resource sets. To this end, the BS may provide the UE with information that may estimate the number of configured sub-areas and the corresponding relationship between each sub-area and a TRS resource set through the higher layer signal.

Proposal 5 provides always stable TRS availability information using A-field and enables detailed scheduling for TRS transmission and reception using, if possible, B-field, thereby increasing the scheduling flexibility of the BS, and at the same time improving a power saving power effect of the UE.

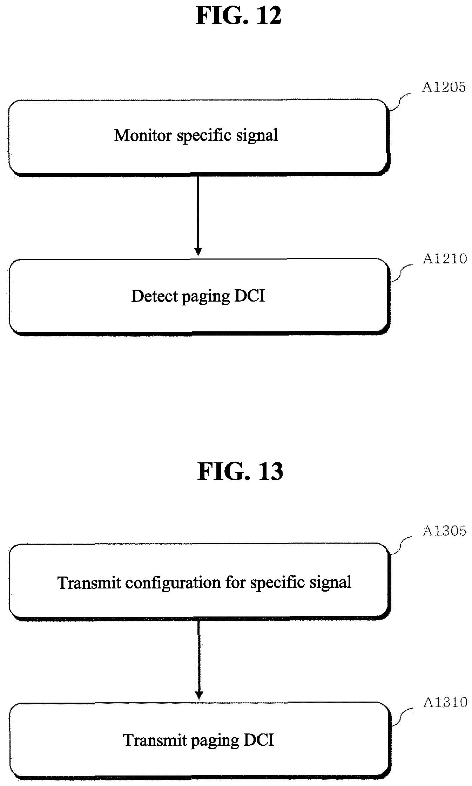

FIG. 12 illustrates a flow of a signal reception method of a UE according to an embodiment of the present disclosure. Referring to FIG. 12, the UE may monitor a specific signal related to whether the UE is required to detect paging DCI in an RRC idle or RRC inactive state (A1205).

The UE may perform detection of the paging DCI in a corresponding PO based on at least one of a plurality of conditions configured in the UE being satisfied as a result of monitoring the specific signal (A1210).

The plurality of conditions configured in the UE for performing the detection of the paging DCI includes a first condition for performing the detection of the paging DCI in a state in which the specific signal is detected as a result of monitoring the specific signal and at least one second condition for performing the detection of the paging DCI even in a state in which the specific signal is not detected as a result of monitoring the specific signal. The UE may perform detection of the paging DCI at least once during a pre-configured time duration based on the at least one second condition even when the specific signal is not detected.

The pre-configured time duration may be determined based on a periodicity for updating system information or an integer multiple of a paging periodicity.

The location of a PO for detection of the paging DCI based on the at least one second condition among a plurality of POs may be preset by the BS.

The UE may perform only detection of the paging DCI without receiving a PDSCH scheduled by the paging DCI, based on at least one second condition being satisfied.

If the specific signal is detected at least once during the pre-configured time duration, the at least one second condition may not be satisfied.

The at least one second condition may be satisfied based on short message information or a TRS availability indication included in the paging DCI being not acquired at least once during the pre-configured time duration.

The specific signal may be a PEI signal or a wake-up signal.

A number of POs for detecting the paging DCI based on the at least one second condition among a plurality of POs may be determined based on the length of the pre-configured time duration.

FIG. 13 illustrates a flow of a signal transmission method of a BS according to an embodiment of the present disclosure.

Referring to FIG. 13, the BS may transmit a configuration for a specific signal related to whether the UE is required to detect paging DCI in an RRC idle or RRC inactive state (A1305).

The BS may transmit the paging DCI in a corresponding PO based on at least one of a plurality of conditions configured in the UE being satisfied (A1310).

The conditions may include a first condition for transmitting the paging DCI in a state in which the specific signal is transmitted based on the configuration for the specific signal and at least one second condition for transmitting the paging DCI although the specific signal is not transmitted. The BS may perform transmission of the paging DCI at least once during a pre-configured time duration based on the at least one second condition although the specific signal is not transmitted.

The preset time period may be determined based on a periodicity for updating system information or an integer multiple of a paging periodicity.

The location of the PO for detection of the paging DCI based on the at least one second condition among the plurality of POs may be preset by the BS.

The BS may perform only transmission of the paging DCI without transmitting a PDSCH scheduled by the paging DCI, based on at least one second condition being satisfied.

If the specific signal is correctly transmitted to the UE at least once during the pre-configured time duration, the at least one second condition may not be satisfied.

The at least one second condition may be satisfied based on short message information or a TRS availability indication included in the paging DCI being not correctly transmitted to the UE at least once during the pre-configured time duration.

The specific signal may be a PEI signal or a wake-up signal.

A number of POs for detecting the paging DCI based on the at least one second condition among a plurality of POs may be determined based on the length of the pre-configured time duration.

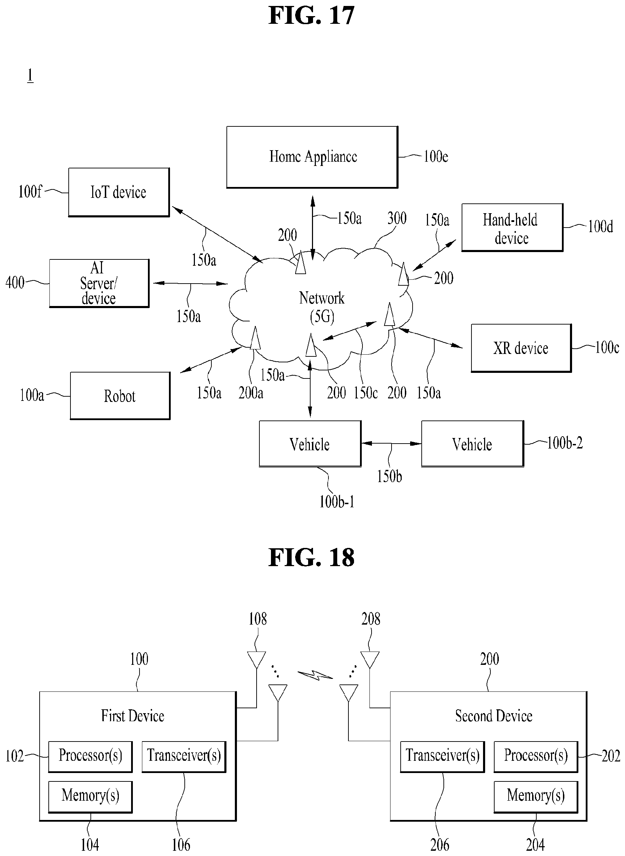

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

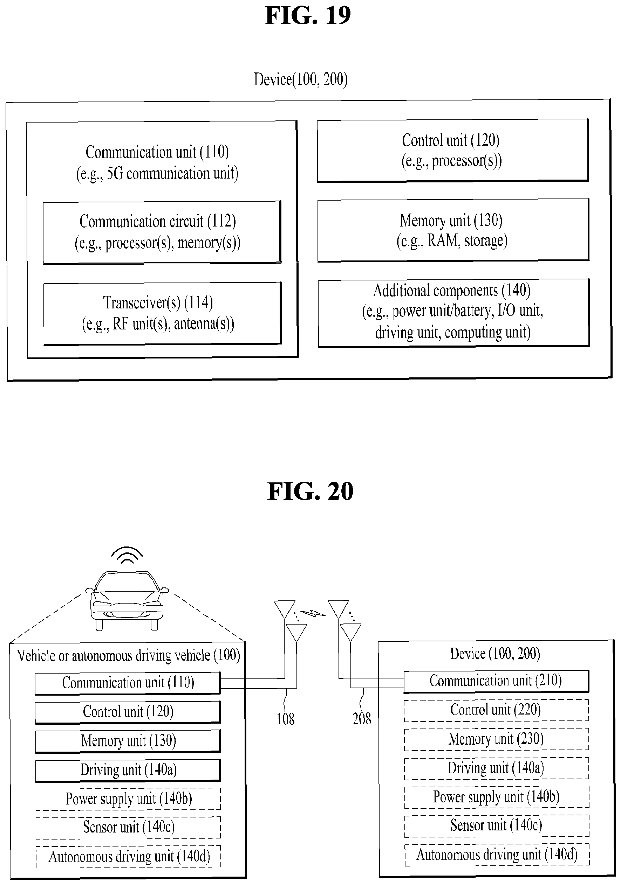

FIG. 19 illustrates another example of a wireless device applied to the present disclosure. The wireless device may be implemented in various forms according to a usecase/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

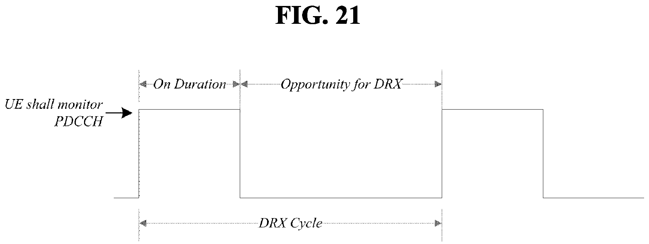

FIG. 21 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 21, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 8 describes a DRX operation of a UE (in the RRC_CONNECTED state). Referring to Table 8, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 8]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-Timer-DL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Applicability**

The present disclosure is applicable to UEs, BSs, or other apparatuses in a wireless mobile communication system.

**Claims**

1. A method of receiving a signal by a user equipment (UE) in a wireless communication system, the method comprising:

    monitoring a specific signal related to whether the UE is required to detect paging downlink control information (DCI) in a radio resource control (RRC) idle or RRC inactive state; and
    performing detection of the paging DCI in a corresponding paging occasion (PO) based on at least one of a plurality of conditions configured in the UE being satisfied as a result of monitoring the specific signal,
    wherein the plurality of conditions configured in the UE for performing the detection of the paging DCI include a first condition for performing the detection of the paging DCI in a state in which the specific signal is detected as a result of monitoring the specific signal and at least one second condition for performing the detection of the paging DCI even in a state in which the specific signal is not detected as a result of monitoring the specific signal, and
    wherein the UE performs the detection of the paging DCI at least once during a pre-configured time duration based on the at least one second condition although the specific signal is not detected.

2. The method of claim 1, wherein the pre-configured time duration is determined based on a periodicity for updating system information or an integer multiple of a paging periodicity.

3. The method of claim 1, wherein, from among a plurality of POs, a location of a PO for detecting the paging DCI based on the at least one second condition is pre-configured by a base station (BS).

4. The method of claim 1, wherein, based on at least one second condition being satisfied, the UE performs only detection of the paging DCI without receiving a physical downlink shared channel (PDSCH) scheduled by the paging DCI.

5. The method of claim 1, wherein the at least one second condition is not satisfied based on detection of the specific signal at least once during the pre-configured time duration.

6. The method of claim 1, wherein the at least one second condition is satisfied based on short message information or a tracking reference signal (TRS) availability indication included in the paging DCI being not acquired at least once during the pre-configured time duration.

7. The method of claim 1, wherein the specific signal is a paging early indication (PEI) signal or a wake-up signal.

8. The method of claim 1, wherein, from among a plurality of POs, a number of POs for detecting the paging DCI based on the at least one second condition is determined based on a length of the pre-configured time duration.

9. A computer-readable recording medium in which a program for performing the method of claim 1 is stored.

10. A device for wireless communication, comprising:

    a memory configured to store instructions; and
    a processor configured to operate by executing the instructions,
    wherein operations of the processor comprise:

        monitoring a specific signal related to whether the device is required to detect paging downlink control information (DCI) in a radio resource control (RRC) idle or RRC inactive state; and

performing detection of the paging DCI in a corresponding paging occasion (PO) based on at least one of a plurality of conditions configured for the device being satisfied as a result of monitoring the specific signal, wherein the plurality of conditions configured in the UE for performing the detection of the paging DCI include a first condition for performing the detection of the paging DCI in a state in which the specific signal is detected as a result of monitoring the specific signal and at least one second condition for performing the detection of the paging DCI even in a state in which the specific signal is not detected as a result of monitoring the specific signal, and

wherein the processor performs detection of the paging DCI at least once during a pre-configured time duration based on the at least one second condition although the specific signal is not detected.

11. The device of claim 10, further comprising:
a transceiver configured to transmit or receive a radio signal under control of the processor.

12. The device of claim 10, wherein the device is a user equipment (UE) operating in a wireless communication system.

13. The device of claim 10, wherein the device is an application specific integrated circuit (ASIC) or a digital signal processing device configured to control a user equipment (UE) operating in a wireless communication system.

14. A method of transmitting a signal by a base station (BS) in a wireless communication system, the method comprising:

transmitting a configuration for a specific signal related to whether a user equipment (UE) is required to detect paging downlink control information (DCI) in a radio resource control (RRC) idle or RRC inactive state; and
transmitting the paging DCI in a corresponding paging occasion (PO) based on at least one of a plurality of conditions configured in the UE being satisfied,
wherein the plurality of conditions include a first condition for transmitting the paging DCI in a state in which the specific signal is transmitted based on the configuration for the specific signal and at least one second condition for transmitting the paging DCI even in a state in which the specific signal is not transmitted, and
wherein the BS performs transmission of the paging DCI at least once during a pre-configured time duration based on the at least one second condition although the specific signal is not transmitted.

15. A base station (BS) for wireless communication system, comprising:

a memory configured to store instructions; and
a processor configured to operate by executing the instructions,
wherein operations of the processor comprise:

transmitting a configuration for a specific signal related to whether a user equipment (UE) is required to detect paging downlink control information (DCI) in a radio resource control (RRC) idle or RRC inactive state; and
transmitting the paging DCI in a corresponding paging occasion (PO) based on at least one of a plurality of conditions configured in the UE being satisfied,
wherein the plurality of conditions include a first condition for transmitting the paging DCI in a state in which the specific signal is transmitted based on the configuration for the specific signal and at least one second condition for transmitting the paging DCI even in a state in which the specific signal is not transmitted, and
wherein the processor performs transmission of the paging DCI at least once during a pre-configured time duration based on the at least one second condition although the specific signal is not transmitted.

EP 4 412 137 A1

# FIG. 1

Initial Cell Search — PSS/SSS & [DLRS] & PBCH — S101

System Information Reception — PDCCH/PDSCH (BCCH) — S102

Random Access Procedure — PRACH (S103) — PDCCH/PDSCH (S104) — PRACH (S105) — PDCCH/PDSCH (S106)

General DL/UL Tx/Rx — S108 — PDCCH/PDSCH — PUSCH/PUCCH — S107
- DL/UL ACK/NACK
- UE CQI/PMI/Rank Report using PUSCH and PUCCH

# FIG. 2

One Frame (10ms)

Half-Frame (5ms) — Half-Frame (5ms)

Subframe 0 (1ms) — Subframe 4 (1ms) — Subframe 5 (1ms) — Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

# FIG. 4

# FIG. 5

# FIG. 6

DL assingment-to-PDSCH offset (K0)

PDCCH  PDSCH  PUCCH

slot

PDSCH-to-HARQ-ACK reporting offset (K1)

# FIG. 7

UL grant-to-PUSCH offset (K2)

PDCCH  PUSCH

# FIG. 8

WUS duration

WUS  PO

Configured maximum
WUS duration

Gap

power

time

# FIG. 9

| Transmit configuration information of paging and PEI | FC101 |

| Transmit PEI | FC102 |

| Transmit paging PDCCH | FC103 |

# FIG. 10

| Receive configuration information of paging and PEI | FC201 |

| Monitor PEI | FC202 |

| Monitor paging PDCCH | FC203 |

# FIG.11

Modification boundary

Modification period#n | Modification period#n+1

PEI Occasion

Paging Occasion

time

gap

EP 4 412 137 A1

# FIG. 12

Monitor specific signal — A1205

Detect paging DCI — A1210

# FIG. 13

Transmit configuration for specific signal — A1305

Transmit paging DCI — A1310

# FIG. 14

FD101

Transmit configuration information
related to TRS/CSI-RS

FD102

Transmit availability information
for TRS/CSI-RS

FD103

Transmit TRS/CSI-RS

# FIG. 15

FC201

Receive configuration information
related to TRS/CSI-RS

FC202

Receive availability information
for TRS/CSI-RS

FC203

Receive TRS/CSI-RS

# FIG.16

| TRS Resource set #0 | TRS Resource set #1 | TRS Resource set #2 | TRS Resource set #3 | TRS Resource set #4 | TRS Resource set #5 | TRS Resource set #6 | TRS Resource set #7 |
|---|---|---|---|---|---|---|---|

| PDCCH MO #0 | PDCCH MO #1 | PDCCH MO #2 | PDCCH MO #3 | PDCCH MO #4 | PDCCH MO #5 | PDCCH MO #6 | PDCCH MO #7 |
|---|---|---|---|---|---|---|---|

EP 4 412 137 A1

# FIG. 17

1

Home Appliance — 100e

100f — IoT device

150a · 300 · 150a

200

Hand-held device — 100d

150a

400 — AI Server/ device

150a

Network (5G)

200

150a

XR device — 100c

100a — Robot

150a · 200a

150a

200 · 150c · 200 · 150a

Vehicle

150b

Vehicle — 100b-2

100b-1

# FIG. 18

108 · 208

100 · 200

First Device

Second Device

102 — Processor(s) · Transceiver(s)

Transceiver(s) · Processor(s) — 202

Memory(s)

Memory(s)

104 · 106 · 206 · 204

# FIG. 19

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 20

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

# FIG. 21

## INTERNATIONAL SEARCH REPORT

| International application No. |
| --- |
| **PCT/KR2022/014760** |

| A. | CLASSIFICATION OF SUBJECT MATTER |
| --- | --- |

**H04L 5/00**(2006.01)i; **H04W 68/02**(2009.01)i; **H04W 72/04**(2009.01)i; **H04W 68/00**(2009.01)i; **H04W 52/02**(2009.01)i

According to International Patent Classification (IPC) or to both national classification and IPC

| B. | FIELDS SEARCHED |
| --- | --- |

Minimum documentation searched (classification system followed by classification symbols)

H04L 5/00(2006.01); H04W 52/02(2009.01); H04W 68/02(2009.01); H04W 76/27(2018.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRC(radio resource control), 휴지 상태(idle state), 비활성 상태(inactive state), PO(paging occasion), 페이징 DCI(paging downlink control information), 모니터링(monitoring)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| DY | 3GPP; TSG RAN; NR; User Equipment (UE) procedures in Idle mode and RRC Inactive state (Release 16). 3GPP TS 38.304 V16.6.0. 27 September 2021.<br> See section 7.1. | 1-15 |
| Y | MODERATOR (MEDIATEK). Summary for Potential Power Saving Enhancements. R1-2007063, 3GPP TSG RAN WG1 e-Meeting #102. 04 September 2020.<br> See sections 2.2 and 3.1-3.2. | 1-15 |
| A | MODERATOR (MEDIATEK). Summary of Paging Enhancements. R1-2103848, 3GPP TSG RAN WG1 #104-bis-e, e-Meeting. 26 April 2021.<br> See section 2. | 1-15 |
| A | WO 2021-018124 A1 (ZTE CORPORATION) 04 February 2021 (2021-02-04)<br> See claims 1-4. | 1-15 |
| A | WO 2021-023501 A1 (PANASONIC INTELLECTUAL PROPERTY CORPORATION OF AMERICA) 11 February 2021 (2021-02-11)<br> See page 19, line 33 - page 20, line 12; and figure 10. | 1-15 |

| ☐ Further documents are listed in the continuation of Box C. | ☑ See patent family annex. |
| --- | --- |

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 January 2023** | **16 January 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/014760**

| Patent document cited in search report | | | Publication date (day/month/year) | Patent family member(s) | | | Publication date (day/month/year) |
|---|---|---|---|---|---|---|---|
| WO | 2021-018124 | A1 | 04 February 2021 | CN | 110536385 | A | 03 December 2019 |
| | | | | EP | 4007378 | A1 | 01 June 2022 |
| | | | | US | 2022-0286970 | A1 | 08 September 2022 |
| WO | 2021-023501 | A1 | 11 February 2021 | EP | 3772228 | A1 | 03 February 2021 |
| | | | | EP | 4008141 | A1 | 08 June 2022 |
| | | | | JP | 2022-543258 | A | 11 October 2022 |
| | | | | US | 2022-0279480 | A1 | 01 September 2022 |

Form PCT/ISA/210 (patent family annex) (July 2022)